# EUROPEAN PATENT APPLICATION

(11) **EP 0 869 030 A1**
(43) Date of publication of application: **07.10.1998**
(21) Application number: 98302550.3
(22) Date of filing: 01.04.1998
(51) Int. Cl.: B60L 5/19

(54) **Pantographs for railway vehicles**

(30) Priority: 05.04.1997 GB 9706998
(71) Applicant: BRECKNELL, WILLIS & CO. LIMITED, Chard, Somerset TA20 2DE (GB)
(72) Inventor: Manning, Michael John Nicholas, Chard, Somerset, TA20 2LD (GB)
(74) Representative: Brown, Michael Stanley

(57) **Abstract**

A pantograph (35) is provided for a variable inclination rail vehicle (30), i.e. a vehicle which includes a body (31) which can be tilted about a longitudinal axis (33) relative to a bogie (32) by means of a tilt actuator (34). The pantograph (35) includes a generally horizontal framework (36) on which an arm structure (41) carrying a contact bow (42) is mounted. The framework (36) is mounted on the roof of the vehicle (30) for tilting movement about a longitudinal axis (39) parallel to the axis (33) so that the framework (36) is maintained substantially horizontal and the centre line of the arm structure (41) is maintained substantially vertical.

## Description

### Field of the Invention

This invention relates to pantographs for railway vehicles.

Most curved portions of railway track have been laid with an inclination or cant which is appropriate to a given vehicle speed. If, however, a rail vehicle travels around the curved portion of the track at a speed in excess of that given vehicle speed, the passengers are subject to centrifugal action, i.e. to discomfort.

With the desire for improved passenger comfort at increased speed, some railway vehicles include coaches which are arranged to tilt about a longitudinal axis so that, as the vehicle passes along curved track, the coaches will tilt so as to minimise the effect of centrifugal action. If the coaches are propelled by separate drive units, which are not subject to tilt, the supply of electrical power to the vehicles from overhead supply lines via pantographs is not affected by tilting of the coaches. If, however, the vehicles are electrical multiple units, i.e. if the individual coaches include drive units, provision must be made for maintaining contact of the pantographs with the overhead supply lines during tilting of the coaches.

One such arrangement is described in European Patent Specification No. 0 436 993, to which reference should be made. This includes the provision of a curved rail on the roof of the vehicle body and the curved rail has its centre of curvature coinciding with the axis about which the vehicle body is arranged to tilt. A carriage or support element for the pantograph is mounted on this support rail and is movable along the rail by means of a hydraulic piston and cylinder mechanism. The piston and cylinder mechanism is operated by a control circuit in such manner that, when the vehicle body is caused to tilt in one direction, the carriage or support element is moved along the support rail in the opposite direction through an angle which is equal and opposite to the angle through which the vehicle body has been tilted.

The cost of providing the curved rail, carriage or support element and piston and cylinder mechanism is substantial and it is accordingly an object of the present invention to provide a more economical method of mounting a pantograph on the roof of a variable inclination rail vehicle.

### Summary of the Invention

According to a first aspect of the present invention there is provided a pantograph for a variable inclination rail vehicle, the pantograph comprising a framework on which a multiple-arm foldable structure carrying a contact is supported, and means for urging the contact into engagement with an overhead supply line, characterised in that the framework is mounted on the roof of the vehicle for tilting movement about a longitudinal axis parallel to the axis about which the inclination of the vehicle is varied.

The axis about which the framework is tilted may be located on the centre line of the vehicle, just above the level of the vehicle roof. Altematively, the axis about which the framework is tilted may be offset from the centre line of the vehicle, but positioned again just above the level of the vehicle roof.

According to a second aspect of the present invention there is provided a pantograph for a variable inclination rail vehicle, the pantograph comprising a framework on which a multiple-arm foldable structure carrying a contact is supported, and means for urging the contact into engagement with an overhead supply line, characterised in that the framework is mounted on the roof of the vehicle in such manner that, regardless of the degree of tilting of the vehicle body to the vehicle bogie, the inclination of the framework to the horizontal remains unchanged.

According to a third aspect of the present invention there is provided a pantograph for a variable inclination rail vehicle, the pantograph comprising a framework on which a multiple-arm foldable structure carrying a contact is supported, and means for urging the contact into engagement with an overhead supply line, characterised in that the framework is mounted on the roof of the vehicle for tilting movement about a longitudinal axis parallel to the axis about which the inclination of the vehicle is varied in such manner that, regardless of the degree of tilting of the vehicle body to the vehicle bogie, the inclination of the framework to the horizontal remains unchanged.

An actuator will be provided for effecting the required tilting or other movements of the framework. The actuator may be a hydraulic piston and cylinder mechanism arranged so that it operates under the control of a control circuit which controls the inclination of the vehicle body so that, as the inclination of the vehicle body changes in one direction, the framework will be tilted or otherwise moved in the opposite direction. The actuator may altematively include a cable mechanism which is again arranged to ensure that, as the inclination of the vehicle body changes in one direction, the framework will be tilted or otherwise moved in the opposite direction.

The contact on the pantograph which engages the overhead electrical supply line will preferably be in the form of a bow. It will be appreciated that, as the inclination of the rail vehicle changes, there will be a small degree of lateral movement of the contact bow relative to the supply line. Such lateral movement will not, however, adversely affect the power supply to the vehicle.

### Brief Description of the Drawings

Figure 1 is a diagrammatic illustration of a first embodiment of tilting pantograph fitted to a variable inclination rail vehicle travelling along a length of curved canted track at a speed substantially in excess of the original design speed for that section of track,
Figures 2 and 3 are diagrammatic illustrations of a second embodiment of tilting pantograph,
Figure 4 shows a hydraulically actuated tilting pantograph, and
Figure 5 shows a cable actuated tilting pantograph.

### Description of the Preferred Embodiments

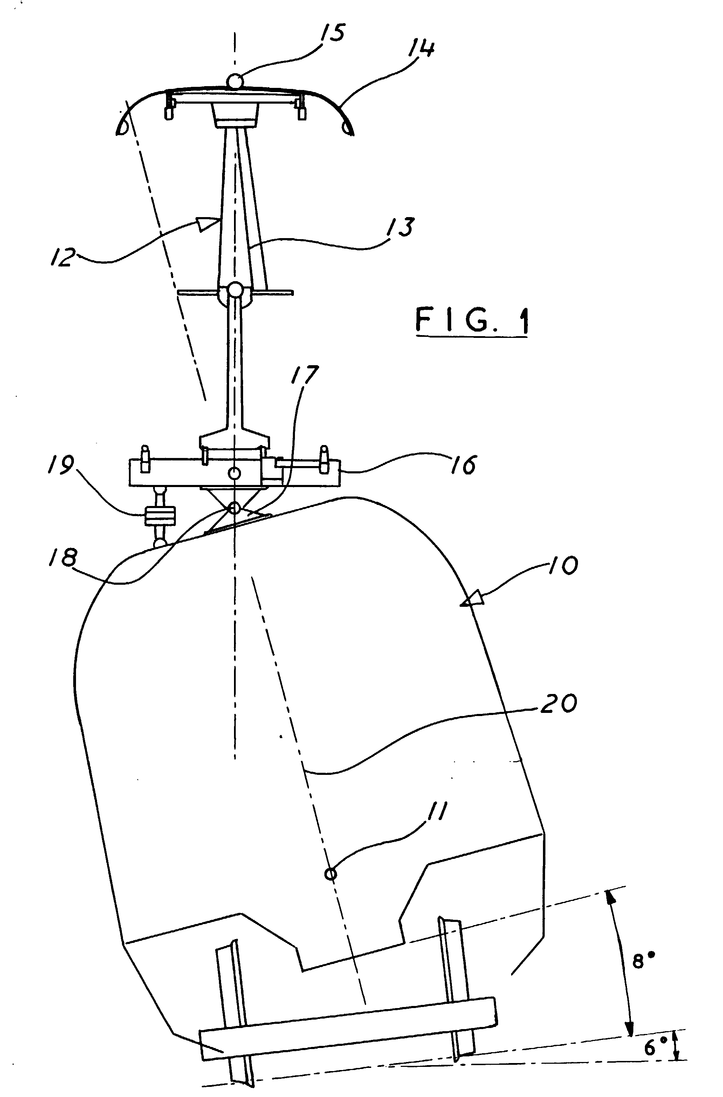

Figure 1 of the drawings shows an electric rail vehicle 10 travelling along a length of curved track canted at an angle of 6° at a speed substantially in excess of the original design speed for that length of track. The rail vehicle 10 has a body which can be caused to tilt relative to its bogie about an axis 11 and, in this instance, the vehicle body is shown as having been tilted through 8°.

A pantograph 12 is mounted on the roof of the vehicle body and includes a generally conventional folding multiple arm structure 13 on which a contact bow 14 is carried. A standard control system (not shown) is provided for urging the structure 13 into a configuration in which reliable electrical contact is maintained between the contact bow 14 and an overhead electrical supply line 15. One form of control system which includes means for maintaining a substantially constant contact force of the contact bow 14 with the supply line 15 is described in co-pending British Patent Application No. 9718650.6, to which reference should be made.

The folding arm structure 13 is carried on a horizontal framework 16 which is pivotally mounted on a support 17 on the roof of the vehicle 10 so that the framework 16 can tilt relative to the vehicle body about a horizontal axis 18 which is parallel to the axis 11 about which the vehicle body tilts relative to the bogie. Such tilting of the framework 16 is effected by means of a hydraulic actuator 19 which is so controlled that, when the vehicle body tilts through 8° in one direction, the framework 16 will be tilted through 8° in the opposite direction about axis 18, i.e. into the position shown in Figure 1. As will be seen from Figure 1, the axis 18 is located just above the roof of the rail vehicle 10.

It is to be noted that, although there will be a small degree of lateral movement of the contact bow 14 relative to the electrical supply line 15, the standard control system acting on the folding arm structure 13 will serve to maintain the bow 14 in effective engagement with the supply line 15.

As illustrated in Figure 1, the axis 18 about which the framework 16 is arranged to tilt is located on the centre line 20 of the vehicle body and the framework 16 is tilted through an angle opposite and approximately equal to that through which the vehicle body has been tilted.

In an alternative arrangement, the framework 16 may be arranged for movement about a hinge axis offset from the centre line 20 of the vehicle body. The controls for the actuator 19 will then be such that, when the vehicle body is tilted, the angle through which the framework 16 is tilted will be either slightly more or slightly less than the angle of tilt of the vehicle body, dependent on the direction in which the vehicle body has been tilted.

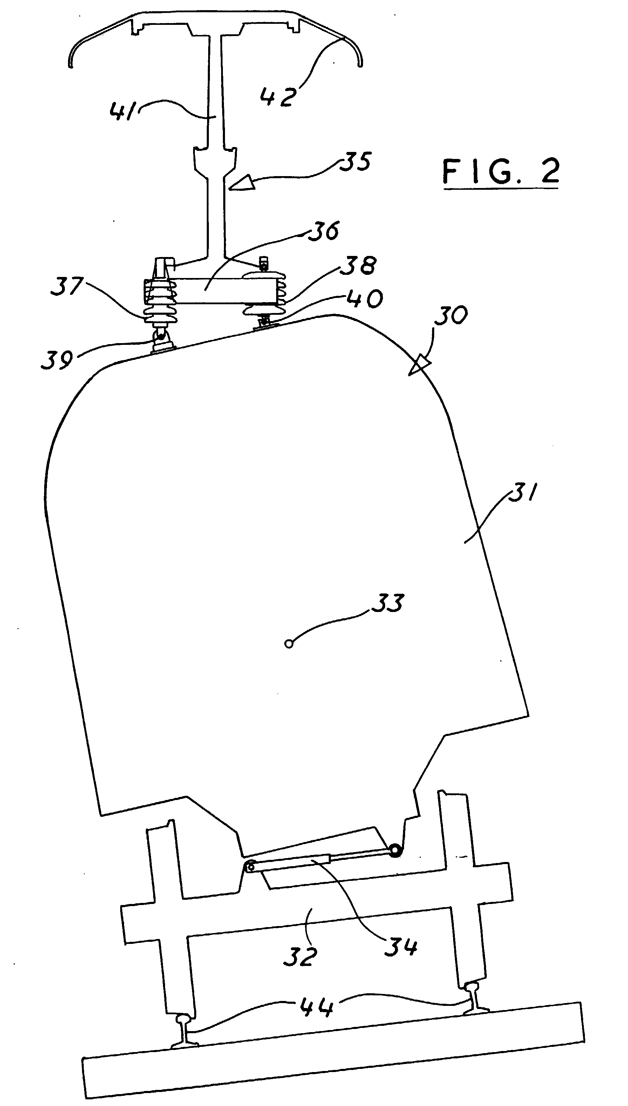

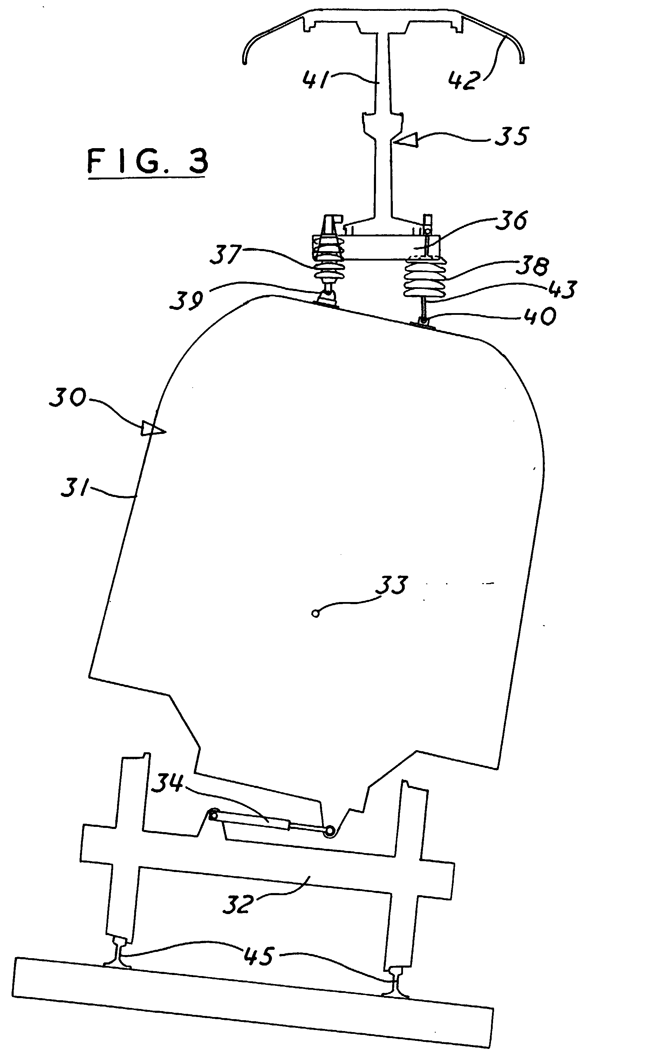

Figures 2 and 3 show a rail vehicle 30 which includes a vehicle body 31 arranged for tilting movement relative to the vehicle bogie 32 about an axis 33 under the control of a tilt actuator 34 in the form of a hydraulic piston and cylinder mechanism.

The pantograph 35 of rail vehicle 30 comprises a rectangular substantially horizontal framework 36 which is mounted on the vehicle body 31 by means of insulator assemblies 37 and 38 pivotally mounted on the roof of the vehicle 30. The insulator assemblies 37 and 38 are arranged for pivotal movement relative to the vehicle body 31 about pivot axes 39 and 40 which are parallel to the axis 33 and are located just above the level of the roof of the vehicle 30.

A generally conventional folding multiple arm structure 41 is mounted on the substantially horizontal framework 36 and carries a contact bow 42. A control system (not shown) is again provided for urging the structure 41 into a configuration in which reliable electrical contact is maintained between the contact bow 42 and the overhead electrical supply line (not shown).

The mounting for insulator assembly 38 includes a pneumatic or hydraulic piston and cylinder assembly 43 which is movable between a retracted condition (as shown in Figure 2) and an extended condition (as shown in Figure 3).

In the arrangement shown in Figure 2, the vehicle 30 is shown moving along a length of track 44 which is inclined at an angle of 6° to the horizontal in an anti-clockwise direction and the vehicle body 31 is shown tilted through an angle of 8°, again in an anti-clockwise direction, relative to the vehicle bogie 32. The piston and cylinder mechanism 43 is in its fully retracted condition and the framework 36 is substantially horizontal.

When the rail vehicle 30 is travelling along a length of track 45 which (as shown in Figure 3) is inclined at an angle of 6° to the horizontal in the clockwise direction, the vehicle body 30 will be tilted relative to the bogie 32 through an angle of 8° in the clockwise direction about the axis 33 by means of the tilt actuator 34. The piston and cylinder mechanism 43 will be in its extended condition and the framework 36 will again be substantially horizontal. It will be appreciated that the controls for the piston and cylinder mechanism 43 will so control extension and contraction of the mechanism that, regardless of the angle of inclination of the track or the angle of tilt of the vehicle body 31 relative to the bogie, the framework 36 will remain substantially horizontal.

It will also be appreciated that, as the vehicle body 31 tilts relative to the bogie 32, under the control of the actuator 34, between the two limiting positions shown in Figures 2 and 3, the framework 36, the foldable arm structure 41 and the contact bow 42 all move laterally. The lateral movement of the contact bow 42 relative to the overhead supply line will, of course, be so controlled that, regardless of the lateral position of the contact bow 42, effective contact with the overhead supply line will be maintained.

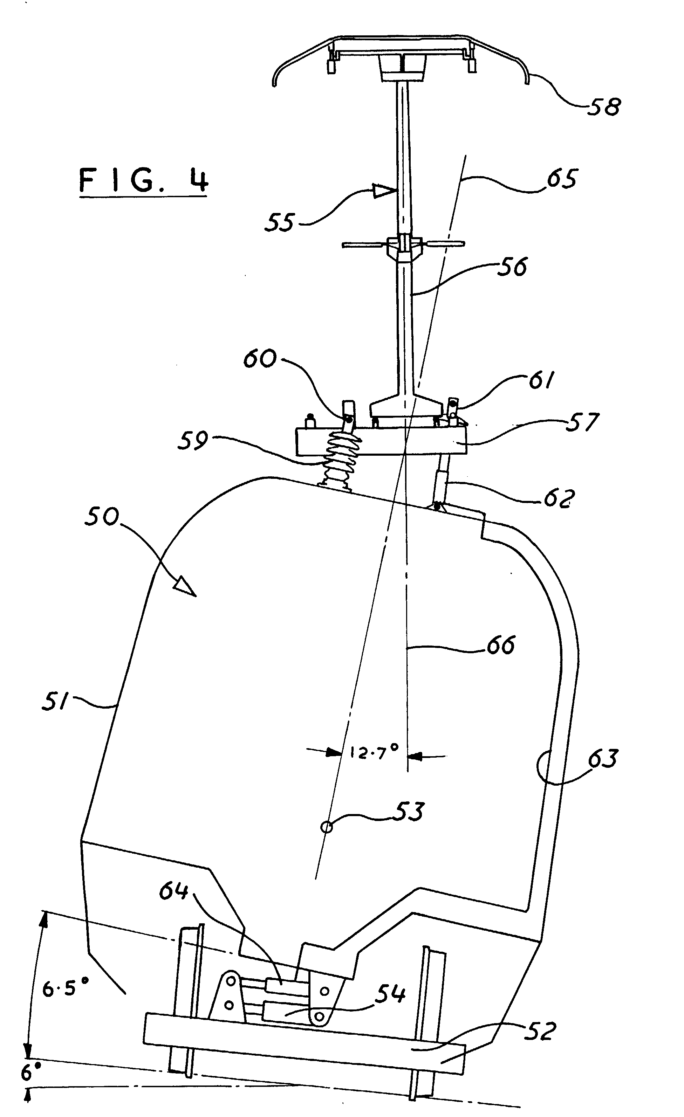

Figure 4 shows an arrangement similar to that shown in Figures 2 and 3. The rail vehicle 50 includes a body 51 which is arranged for tilting movement relative to the vehicle bogie 52 about a tilt axis 53 under the action of a tilt actuator 54 in the form of a hydraulic piston and cylinder mechanism. The vehicle is shown in Figure 4 travelling along a length of track which is inclined at an angle of 6° to the horizontal and the vehicle body 51 is indicated as having been tilted through an angle of 6.5° relative to the vehicle bogie 52.

The pantograph 55 comprises a foldable multi-arm structure 56 mounted on a generally horizontal framework 57 and a contact bow 58 which is urged by the pantograph control means (not shown) into engagement with the overhead supply line (also not shown). The framework 57 is mounted above the roof of the rail vehicle 50 and is arranged for pivotal movement relative to an insulator assembly 59 on the roof of the vehicle 50. As shown, the lower end of the insulator assembly 59 is mounted rigidly on the roof of the vehicle 50 and the framework 57 pivots relative to the upper end of the insulator assembly 59 about an axis 60. The axis 60 extends parallel to the axis 53 and is located just above the level of the roof of the vehicle 50.

The insulator assembly 59 is positioned at one side of the framework 57 and the other side of the framework 57 is supported above the vehicle roof on an insulator assembly 61 which includes a hydraulic piston and cylinder mechanism 62. The piston and cylinder mechanism 62 is arranged for expansion and contraction so as to effect pivotal movement of the framework 57 about the axis 60. The piston and cylinder mechanism 62 is connected by a hydraulic line 63 to a hydraulic piston and cylinder mechanism 64 mounted on the vehicle bogie 52 adjacent the tilt actuator 54. Piston and cylinder mechanism 64 acts as a pantograph master actuator while piston and cylinder mechanism 62 acts as the pantograph slave actuator. Movement of the tilt actuator 54 thus produces corresponding movement of the pantograph master actuator 64, resulting in corresponding movement of the pantograph slave actuator 62.

The arrangement is such that, when the vehicle is travelling along track which is inclined at 6° to the horizontal and the vehicle body 51 has been tilted through 6.5° relative to the vehicle bogie 52, the framework 57 will have been tilted through an angle such that the angle between the centre line 65 of the coach and the centre line 66 of the foldable arm structure 66 is 12.7°. The framework 57 will be tilted about the axis 60 by means of the pantograph slave actuator 62 in such manner that, regardless of the inclination of the vehicle centre line 66 to the vertical, the framework 57 will remain substantially horizontal. The contact bow 58 will be displaced laterally relative to the overhead supply line but will be maintained in effective contact with the overhead supply line.

In a modification to the arrangement shown in Figure 4, the insulator assembly 59 is pivotally mounted on the roof of the vehicle 50 as well as being pivotally connected to the framework 57.

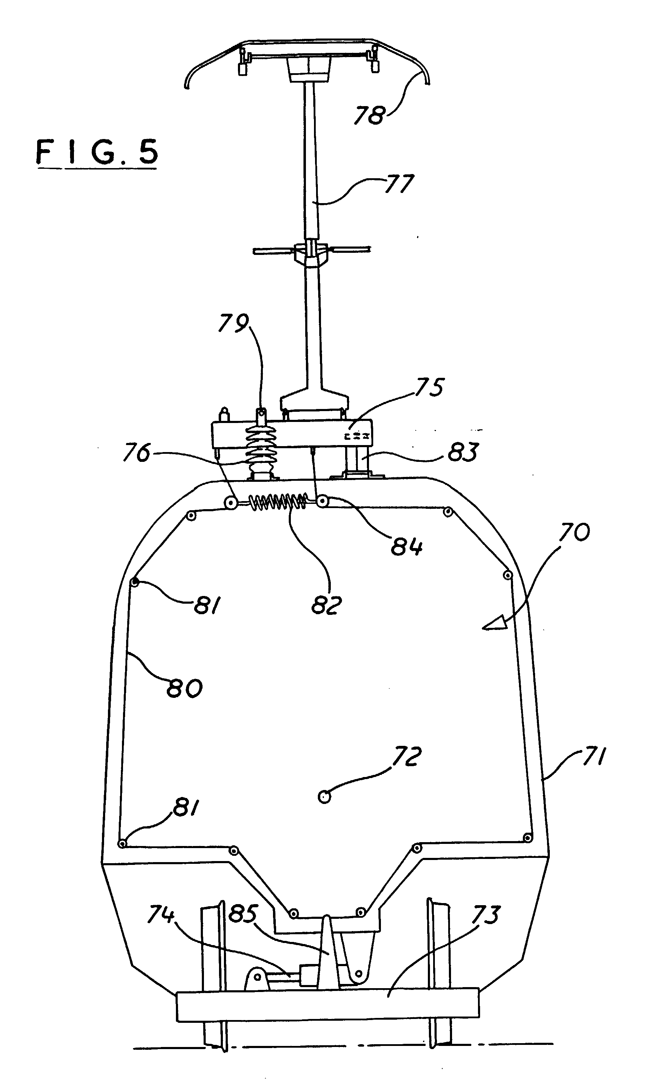

Turning next to Figure 5, this shows a rail vehicle 70 comprising a vehicle body 71 which can be tilted about a horizontal axis 72 relative to a vehicle bogie 73. Tilting of the vehicle body 71 is effected by a tilt actuator 74 in the form of a hydraulic piston and cylinder mechanism. A framework 75 is mounted on the roof of the vehicle by means of an insulator assembly 76 and a foldable multi-arm structure 77 carrying a contact bow 78 is carried by the framework 75.

The framework 75 is pivotally connected to the upper end of the insulator assembly 76 for movement relative thereto about a horizontal axis 79 which is disposed just above the roof of the rail vehicle 70 and extends parallel to the axis 72 about which the vehicle body 71 tilts relative to the vehicle bogie 73. The lower end of the insulator assembly 76 is either pivotally connected to the roof of the rail vehicle 70 or fixedly mounted on the roof of the vehicle 70. One end of a cable 80 is attached to one end of the framework 75 and passes over an array of pulleys 81 within the vehicle body 71. The other end of the cable 80 is then attached to the central portion of the framework 75 almost in line with the centre line of the foldable arm structure 77. A spring tensioner 82 (for maintaining a substantially constant tension in the cable 80) acts on one 84 of the pulleys and a pantograph tilt centralising spring 83 acts between the other end of the framework 75 and the roof of the vehicle.

The cable 80 is connected to a pillar 85 mounted on the bogie 73 and the arrangement is such that, as the vehicle body 71 is tilted relative to the vehicle bogie by means of the tilt actuator, the pulleys 81 will move relative to the cable 80 and one or other end of the cable 80 will apply pressure to the framework 75 causing it to pivot relative to the insulator 76 about the axis 79 (and also causing the insulator assembly 76 to pivot relative to the roof of the vehicle 70 if the insulator assembly 76 is pivotally as opposed to fixedly mounted on the roof of the vehicle 70).

The arrangement will be such that, regardless of the direction in which the vehicle body 71 is caused to tilt about the axis 72, the framework 75 will be caused to pivot a greater amount in the opposite direction such that the framework 75 will be maintained substantially horizontal and the centre line of the arm structure 77 will be maintained substantially vertical. The contact bow 78 will be displaced laterally relative to the overhead supply line but will be maintained in continuous effect engagement with the supply line.

## Claims

1. A pantograph for a variable inclination rail vehicle, the pantograph comprising a framework on which a multi-arm foldable structure carrying a contact is supported and means for urging the contact into engagement with an overhead supply line, characterised in that the framework is mounted on the roof of the vehicle for tilting movement about a longitudinal axis parallel to the axis about which the inclination of the vehicle is varied.

2. A pantograph as claimed in Claim 1, in which the axis about which the framework is tilted is located on the centre line of the vehicle, just above the level of the vehicle roof.

3. A pantograph as claimed in Claim 1, in which the axis about which the framework is tilted is offset from the centre line of the vehicle and is located just above the level of the vehicle roof.

4. A pantograph for a variable inclination rail vehicle, the pantograph comprising a framework on which a multiple-arm foldable structure carrying a contact is supported, and means for urging the contact into engagement with an overhead supply line, characterised in that the framework is mounted on the roof of the vehicle in such manner that, regardless of the degree of tilting of the vehicle body to the vehicle bogie, the inclination of the framework to the horizontal remains unchanged.

5. A pantograph for a variable inclination rail vehicle, the pantograph comprising a framework on which a multiple-arm foldable structure carrying a contact is supported, and means for urging the contact into engagement with an overhead supply line, characterised in that the framework is mounted on the roof of the vehicle for tilting movement about a longitudinal axis parallel to the axis about which the inclination of the vehicle is varied in such manner that, regardless of the degree of tilting of the vehicle body to the vehicle bogie, the inclination of the framework to the horizontal remains unchanged.

6. A pantograph as claimed in any one of the preceding claims, including an actuator for effecting the required tilting or other movements of the framework, the actuator being a hydraulic piston and cylinder mechanism arranged so that it operates under the control of a control circuit which controls the inclination of the vehicle body so that, as the inclination of the vehicle body changes in one direction, the framework will be tilted or otherwise moved in the opposite direction.

7. A pantograph as claimed in any one of Claims 1 to 5, including an actuator for effecting the required tilting or other movements of the framework, the actuator including a cable mechanism arranged to ensure that, as the inclination of the vehicle body changes in one direction, the framework will be tilted or otherwise moved in the opposite direction.

8. A rail vehicle fitted with a pantograph as claimed in any one of the preceding claims.
